# EUROPÄISCHE PATENTSCHRIFT

(11) **EP 2 822 835 B1**
(45) Veröffentlichungstag und Bekanntmachung des Hinweises auf die Patenterteilung: **20.07.2016**
(21) Anmeldenummer: 13704366.7
(22) Anmeldetag: 14.02.2013
(51) Int. Cl.: B62D 7/22, F16F 15/02, B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 06.03.2012 AT 2852012
(43) Veröffentlichungstag der Anmeldung: 14.01.2015
(73) Patentinhaber: ThyssenKrupp Presta Aktiengesellschaft, 9492 Eschen (LI); ThyssenKrupp AG, 45143 Essen (DE)
(72) Erfinder: MEYER, Martin, CH-9014 St. Gallen (CH); HUBER, Sebastian, A-6811 Göfis (AT)
(74) Vertreter: ThyssenKrupp Intellectual Property GmbH
(86) Internationale Anmeldenummer: PCT/EP2013/000431
(87) Internationale Veröffentlichungsnummer: WO 2013/131608

(56) Entgegenhaltungen:
- WO-A1-2010/069434
- US-A1- 2009 064 814

## Beschreibung

Die Erfindung bezieht sich auf eine Lenksäule für ein Kraftfahrzeug, die in mindestens eine Verstellrichtung verstellbar ist, wobei zur Verstellung in die Verstellrichtung oder in mindestens eine der Verstellrichtungen ein von einem Antriebsmotor angetriebener Spindelantrieb vorgesehen ist, der eine in eine axiale Richtung sich erstreckende Gewindespindel aufweist.

Bei verstellbaren Lenksäulen für Kraftfahrzeuge ist die das Lenkrad tragende Lenkspindel und somit auch das Lenkrad gegenüber einem Montageteil verstellbar, über welches die Lenksäule an der Karosserie des Kraftfahrzeuges befestigbar ist, was eine Komfortfunktion der Lenksäule darstellt. Übliche Verstellmöglichkeiten sind hierbei eine Längenverstellung und/oder eine Höhen- bzw. Neigungsverstellung. Neben verstellbaren Lenksäulen, bei denen die Verstellung nach Öffnen eines Spannmechanismus manuell durchgeführt wird, sind auch elektrisch verstellbare Lenksäulen bekannt. Bei diesen erfolgt die Verstellung in die Verstellrichtung der Längenverstellung und/oder in die Verstellrichtung der Höhen- bzw. Neigungsverstellung motorisch mittels mindestens eines Antriebsmotors. Eine gebräuchliche Ausbildung sieht hierbei vor, dass der Antriebsmotor Teil eines Spindelantriebs ist. Spindelantriebe, die auch als Spindelhubgetriebe oder Spindeltriebe bezeichnet werden, weisen zur Umsetzung einer Drehbewegung in eine translatorische Bewegung eine Gewindespindel auf, auf deren äußerem Gewinde eine Gewindemutter angeordnet ist. Entweder wird vom Antriebsmotor über entsprechende Getriebeglieder die Gewindemutter angetrieben und durch die Drehung der Gewindemutter die Gewindespindel axial verstellt oder die Gewindespindel angetrieben und durch die Drehung der Gewindespindel die Spindelmutter axial verstellt. Der Antrieb der Gewindemutter oder der Gewindespindel erfolgt im Allgemeinen mittels einer auf einer Motorwelle angeordneten Schnecke, die mit einer Schneckenverzahnung in Eingriff steht, welche am äußeren Umfang der Spindelmutter (im Falle des Antriebs der Spindelmutter) oder am äußeren Umfang eines mit der Gewindespindel starr verbundenen Zahnrads (im Falle eines Antriebs der Gewindespindel) angeordnet ist.

Eine elektrisch verstellbare Lenksäule mit einem Spindelantrieb geht beispielsweise aus der DE 10 2007 039 361 A1 hervor.

Ein generelles Problem von elektrisch verstellbaren Lenksäulen besteht darin, die Geräusche während der Verstellung zu reduzieren. Die DE 10 2006 036 183 B4 schlägt zu diesem Zweck einen Riementrieb vor, der den elektrischen Antriebsmotor akustisch trieblich vom Verstellgetriebe trennt. Die DE 10 2009 057 388 schlägt eine piezoelektrisch angetriebene aktive Schwingungsdämpfung vor. Beide Technologien sind sehr aufwendig und teuer.

Bei der aus der EP 1 486 395 B1 bekannten elektrisch verstellbaren Lenksäule ist an der axial verstellbaren Spindelmutter des Spindelantriebs ein Übertragungsteil mit einem Kugelkopf vorgesehen, der in eine zylindrische Hülse ragt. Diese ist mit einer elastomeren Auskleidung versehen, wodurch auch eine Geräuschverminderung erreicht wird. Auch diese Technik ist aufwendig, da die Führung, mit der die Spindelmutter die Bewegung auf das verstellbare Lenksäulenteil überträgt, sehr exakt ausgebildet sein muss, um Klappern und Klemmen zu vermeiden. Auch ist die durch die in dieser Schrift gezeigte Ausbildung erreichte Geräuschdämmung eingeschränkt.

Aus der WO 2010/069434 A1 gehen Ausführungsbeispiele von elektrisch verstellbaren Lenksäulen hervor, wobei zur Geräuschreduktion ein Gehäuseteil, insbesondere eines elektrischen Antriebsmotors, und/oder ein Halteteil aus einem als Verbundwerkstoff ausgeführten Blech gefertigt ist, wobei der Verbundwerkstoff eine erste metallische Schicht und eine zweite metallische Schicht aufweist, zwischen denen eine Schicht aus einem viskoelastichen Material oder einem Elastomer angeordnet ist.

Aufgabe der Erfindung ist es bei einer Lenksäule der eingangs genannten Art eine einfache und kostengünstige und effektive Geräuschdämmung bereitzustellen. Erfindungsgemäß gelingt dies durch eine Lenksäule mit den Merkmalen des Anspruchs 1. Die abhängigen Ansprüche beziehen sich auf vorteilhafte Weiterbildungen der Erfindung.

Bei der Lenksäule gemäß der Erfindung ist die Lenksäule in mindestens eine Verstellrichtung mittels eines von einem Antriebsmotor angetriebenen Spindelantriebs verstellbar, wobei der Antriebsmotor mit einem tragenden Teil der Lenksäule über eine Dämpfungseinheit verbunden ist. Die Dämpfungseinheit umfasst ein primäres Verbindungsteil, welches eine erste Anlagefläche aufweist, und ein sekundäres Verbindungsteil, welches eine zweite Anlagefläche aufweist. Die erste und die zweite Anlagefläche sind in axialer Richtung der Gewindespindel voneinander beabstandet. Zwischen der ersten und der zweiten Anlagefläche befindet sich ein elastomeres oder viskoelastisches Dämpfungsmaterial, das in Kontakt mit der ersten und der zweiten Anlagefläche steht. Bei einer auf die Dämpfungseinrichtung einwirkenden Kraft oder Kraftkomponente, die in axialer Richtung der Gewindespindel im Sinne einer Annäherung der ersten und der zweiten Anlagefläche wirkt, wird das zwischen der ersten und der zweiten Anlagefläche angeordnete Dämpfungsmaterial auf Druck belastet. Bei einer Druckbelastung des Dämpfungsmaterials ist die Steifigkeit der Dämpfungseinheit aber vorteilhafterweise höher (d.h. die einer Annäherung der ersten und der zweiten Anlagefläche entgegengerichtete Kraft ist höher) als bei einer Schubbelastung (=Belastung auf Scherung) des Dämpfungsmaterials, also bei einer im Sinne einer Verschiebung des primären gegenüber dem sekundären Verbindungsteil in eine Richtung rechtwinkelig zur axialen Richtung der Gewindespindel wirkenden Kraft oder Kraftkomponente. Dadurch wird ein anisotropes Systemverhalten erreicht.

Damit können die vom Spindelantrieb in die Lenksäule eingebrachten Vibrationen gering gehalten werden, wobei die Ankopplung des Spindelantriebs an das den Antriebsmotor tragende Teil der Lenksäule dennoch relativ steif ausgebildet sein kann. Mit anderen Worten wird eine elastische Entkopplung des den Antriebsmotor aufweisenden Spindelantriebs erreicht bei gleichzeitigem Erhalt der Steifigkeit in Hauptkraftrichtung (=axiale Richtung der Gewindespindel). Der Erhalt der Steifigkeit in die Hauptkraftrichtung ist von wesentlicher Bedeutung, da andernfalls die Verstellung und das Fahrgefühl des Lenkers unvorteilhaft beeinflusst würden.

Günstigerweise steht eines der Verbindungsteile, beispielsweise das primäre Verbindungsteil, mit dem Antriebsmotor direkt oder indirekt in starrer oder gelenkiger Verbindung, während das andere der Verbindungsteile, beispielsweise das sekundäre Verbindungsteil, mit dem den Antriebsmotor tragenden Teil der Lenksäule direkt oder indirekt in starrer oder gelenkiger Verbindung steht.

Die Oberflächennormalen auf die erste und die zweite Anlagefläche liegen vorzugsweise parallel zueinander, sind aber in entgegengesetzte Richtungen gerichtet, wobei die Verbindungsteile insbesondere jeweils einen plattenförmig ausgebildeten Abschnitt aufweisen, der rechtwinkelig zur axialen Richtung der Gewindespindel steht und die jeweilige Anlagefläche aufweist.

Das zwischen der ersten und der zweiten Anlagefläche angeordnete Dämpfungsmaterial weist vorteilhafterweise eine plattenförmig ausgebildete Lage auf, die rechtwinkelig zur axialen Richtung der Gewindespindel steht und deren beiden in die axiale Richtung der Gewindespindel beabstandeten Seitenflächen an den ersten und zweiten Anlageflächen anliegen.

Eine vorteilhafte Ausführungsform der Erfindung sieht vor, dass das primäre Verbindungsteil eine dritte Anlagefläche aufweist, die in die entgegengesetzte Richtung wie die erste Anlagefläche weist, und das sekundäre Verbindungsteil eine vierte Anlagefläche aufweist, die in die entgegengesetzte Richtung wie die zweite Anlagefläche weist, wobei die dritte und die vierte Anlagefläche in axialer Richtung der Gewindespindel voneinander beabstandet sind und ein elastomeres oder viskoelastisches Dämpfungsmaterial zwischen der dritten und der vierten Anlagefläche befindet, das in Kontakt mit der dritten und vierten Anlagefläche steht. Bei einer auf die Dämpfungseinrichtung einwirkenden Kraft oder Kraftkomponente, die im Sinne einer gegenseitigen Verschiebung zwischen dem primären und dem sekundären Verbindungsteil in axialer Richtung der Gewindespindel wirkt, wird somit entweder das zwischen der ersten und der zweiten Anlagefläche angeordnete Dämpfungsmaterial (im Falle der Kraftrichtung in eine der axialen Richtungen der Gewindespindel) oder das zwischen der dritten und der vierten Anlagefläche angeordnete Dämpfungsmaterial (im Falle einer Kraftrichtung in die andere der axialen Richtungen der Gewindespindel) auf Druck beaufschlagt.

Das zwischen der dritten und der vierten Anlagefläche angeordnete Dämpfungsmaterial weist vorteilhafterweise eine plattenförmig ausgebildete Lage auf, die rechtwinkelig zur axialen Richtung der Gewindespindel steht und deren beiden in die axiale Richtung der Gewindespindel beabstandeten Seitenflächen an der dritten und der vierten Anlagefläche anliegen. Es können hierbei separate Dämpfungsteile vorgesehen sein, die das zwischen der ersten und der zweiten Anlagefläche und das zwischen der dritten und der vierten Anlagefläche angeordnete Dämpfungsmaterial bilden. Die zwischen der ersten und der zweiten Anlagefläche und zwischen der dritten und der vierten Anlagefläche angeordneten Lagen könnten auch Abschnitte eines gemeinsamen Dämpfungsteils sein.

Vorzugsweise wird das zwischen der dritten und der vierten Anlagefläche angeordnete Dämpfungsmaterial vom gleichen Werkstoff wie das zwischen der ersten und der zweiten Anlagefläche angeordnete Dämpfungsmaterial gebildet.

Günstigerweise weisen rechtwinkelig zur axialen Richtung der Gewindespindel stehende plattenförmig ausgebildete Abschnitte des primären und sekundären Verbindungsteils die dritte und die vierten Anlagefläche auf.

Eine bevorzugte Ausführungsform der Erfindung sieht vor, dass das primäre Verbindungsteil eine U-förmige Ausbildung aufweist, wobei die ersten und dritten Anlageflächen von den zueinander gerichteten Flächen von U-Schenkeln des primären Verbindungsteils gebildet werden, welche durch einen Basisschenkel miteinander verbunden sind, und dass das sekundäre Verbindungsteil in den Zwischenraum zwischen den beiden U-Schenkeln ragt, wobei die zweite und die vierte Anlagefläche insbesondere von den voneinander weggerichteten Flächen eines in den Zwischenraum zwischen den U-Schenkeln ragenden Steges des sekundären Verbindungsteils gebildet werden.

Für bestimmte Anwendungsfälle kann es jedoch bei im Wesentlichen gleicher Konstruktion vorgesehen sein, einige oder alle der in der jeweiligen Ausführung vorgesehenen Anlageflächen gegeneinander unter einem kleinen Winkel geneigt anzuordnen. Derartige Winkel betragen vorzugsweise weniger als 7°, wobei im Falle der Abweichung von 0° besonders bevorzugt der Winkel wenigstens 1° beträgt. Entsprechend sind in dem derartigen Anwendungsfall bevorzugt die erste Anlagefläche gegenüber der zweiten Anlagefläche um einen Winkel von weniger als 7° geneigt angeordnet und/oder im Falle, das diese in der entsprechenden Ausführungsform vorhanden sind, die dritte Anlagefläche gegenüber der vierten Anlagefläche um einen Winkel von weniger als 7° geneigt. Dabei ist der Neigungswinkel, wenn er nicht 0° beträgt bevorzugt größer als 1 °.

Ebenso kann es vorgesehen sein, für den Fall, dass erste, zweite, dritte und vierte Anlageflächen vorgesehen sind, ausschließlich die erste Anlagefläche gegenüber der dritten Anlagefläche im Bereich von 1° - 7° geneigt anzuordnen. Ebenso kann es vorgesehen sein, für den Fall, dass erste, zweite, dritte und vierte Anlageflächen vorgesehen sind, ausschließlich die zweite Anlagefläche gegenüber der vierten Anlagefläche im Bereich von 1° - 7° geneigt anzuordnen. Für den Fall, dass eine im Wesentlichen U-förmige Gestalt des primären Verbindungsteils vorgesehen ist, ist die Neigung mit Vorteil so ausgebildet, dass sich die vergrößert gedachten Anlageflächen auf der von den Anlageflächen abgewandten Seite des Basisschenkels schneiden.

Durch eine derartige wenig geneigte Anordnung kann einerseits die Geräuschdämmung durch bessere Streuwirkung verbessert werden und andererseits ist die Steifigkeit nur geringfügig vermindert. Dies ist besonders vorteilhaft, wenn das Geräusch-Anregungsspektrum des Elektromotors einen breiten Frequenzbereich und/oder einen Frequenzbereich mit vielen Geräusch-Anteilen bei Frequenzen unterhalb von 100Hz umfasst.

Eine erfindungsgemäße Dämpfungseinheit kann im Zusammenhang mit dem Spindelantrieb für die Längenverstellung und/oder mit dem Spindelantrieb für die Höhen- bzw. Neigungsverstellung eingesetzt werden.

Zur Ermöglichung der Höhen- oder Neigungsverstellung ist eine die Lenkspindel tragende Schwenkeinheit der Lenksäule gegenüber dem Montageteil verschwenkbar, wobei die Verschwenkung mittels eines von einem Antriebsmotor angetriebenen Spindelantrieb durchgeführt wird und hierbei der Antriebsmotor über eine Dämpfungseinheit mit der Schwenkeinheit oder mit dem Montageteil in der zuvor beschriebenen Weise verbunden ist. Bevorzugt ist hierbei eine Verbindung mit der Schwenkeinheit. Der Spindelantrieb, der Antriebsmotor und die Dämpfungseinheit für die Höhen- bzw. Neigungsverstellung werden in der Folge als Schwenk-Spindelantrieb, Schwenk-Antriebsmotor und Schwenk-Dämpfungseinheit bezeichnet.

Zur Ermöglichung der Längenverstellung der Lenksäule ist eine die Lenkspindel drehbar lagernde Manteleinheit gegenüber dem Montageteil in die Verstellrichtung der Längenverstellung verschiebbar, wobei diese Verschiebbarkeit, falls die Lenksäule auch in der Höhe bzw. Neigung verstellbar ist, vorzugsweise dadurch realisiert wird, dass die Manteleinheit von der Schwenkeinheit in die Verstellrichtung der Längenverstellung verschiebbar gelagert ist. Die Längenverstellung erfolgt mittels eines von einem Antriebsmotor angetriebenen Spindelantriebs, wobei der Antriebsmotor über eine Dämpfungseinheit mit der Schwenkeinheit oder der Manteleinheit oder dem Montageteil in der zuvor beschriebenen Weise verbunden ist. Die Verbindung mit der Schwenkeinheit ist hierbei bevorzugt. Der Spindelantrieb, der Antriebsmotor und die Dämpfungseinheit für die Längenverstellung werden in der Folge als Verschiebe-Spindelantrieb, Verschiebe-Antriebsmotor und Verschiebe-Dämpfungseinheit bezeichnet.

Die Verschwenkung der Schwenkeinheit gegenüber dem Montageteil erfolgt vorzugsweise durch Verschwenkung eines Stellhebels, an dem der Schwenk-Spindelantrieb angreift und der an der Schwenkeinheit und am Montageteil verschwenkbar gelagert ist. In einer vorteilhaften Ausbildung dieses Stellhebels ist vorgesehen, dass dieser aus einem als Verbundwerkstoff ausgeführten Blech gefertigt ist, wobei der Verbundwerkstoff eine erste metallische Schicht und eine zweite metallische Schicht aufweist, zwischen denen eine dritte Schicht aus einem viskoelastischen Material oder einem Elastomer angeordnet ist. Über diesen Stellhebel übertragene Vibrationen, insbesondere in Form von Körperschall, können dadurch gedämpft werden.

In einem auch als unabhängig zu betrachtenden, vorteilhaften Aspekt der Erfindung umfasst eine Lenksäule für ein Kraftfahrzeug, welche in mindestens eine Verstellrichtung verstellbar ist, wobei zur Verstellung in die Verstellrichtung oder in mindestens eine der Verstellrichtungen ein von einem Antriebsmotor angetriebener Spindelantrieb vorgesehen ist, der eine in eine axiale Richtung sich erstreckende Gewindespindel aufweist, mindestens ein Übertragungselement, das zur Übertragung einer Bewegung des Spindelantriebs oder eines der Spindelantriebe auf ein in die Verstellrichtung oder eine der Verstellrichtungen verstellbares Bauteil der Lenksäule einerseits mit dem Spindelantrieb oder einem der Spindelantriebe, vorzugsweise verschwenkbar, und andererseits mit dem verstellbaren Bauteil der Lenksäule verbunden ist. Das Übertragungselement ist aus einem als Verbundwerkstoff ausgeführten Blech gefertigt, wobei der Verbundwerkstoff eine erste metallische Schicht und eine zweite metallische Schicht aufweist, zwischen denen eine dritte Schicht aus einem elastomeren oder viskoelastischen Material angeordnet ist. Eine derartige Lenksäule kann mit weiteren, weiter oben angeführten Merkmalen, einzeln oder in Kombination, kombiniert werden.

Bei einer zumindest auch in der Höhe oder Neigung verstellbaren Lenksäule kann es sich bei dem zuvor genannten Übertragungselement, das aus dem beschriebenen Verbundwerkstoff ausgebildet ist, um einen Stellhebel handeln, der an einem an der Karosserie des Kraftfahrzeuges befestigbaren Montageteil sowie an einer zur Höhen- bzw. Neigungsverstellung der Lenksäule gegenüber diesem Montageteil verschwenkbaren Schwenkeinheit verschwenkbar gelagert ist.

Bei einer zumindest auch in der Länge verstellbaren Lenksäule kann es sich bei dem zuvor genannten Übertragungselement, das aus dem beschriebenen Verbundwerkstoff ausgebildet ist, um eine Lasche handeln, die mit dem in die Verstellrichtung der Längenverstellung verstellbaren Bauteil, insbesondere einer die Lenkspindel drehbar lagernden Manteleinheit , vorzugsweise verschwenkbar, verbunden ist.

Eine Kombination einer Höhen- bzw. Neigungsverstellung und einer Längenverstellung ist vorteilhafterweise möglich, wobei sowohl der genannte Stellhebel als auch die genannte Lasche aus dem zuvor beschriebenen Verbundwerkstoff ausgebildet sind.

Weitere Vorteile und Einzelheiten der Erfindung werden im Folgenden anhand der beiliegenden Zeichnung erläutert. In dieser zeigen:

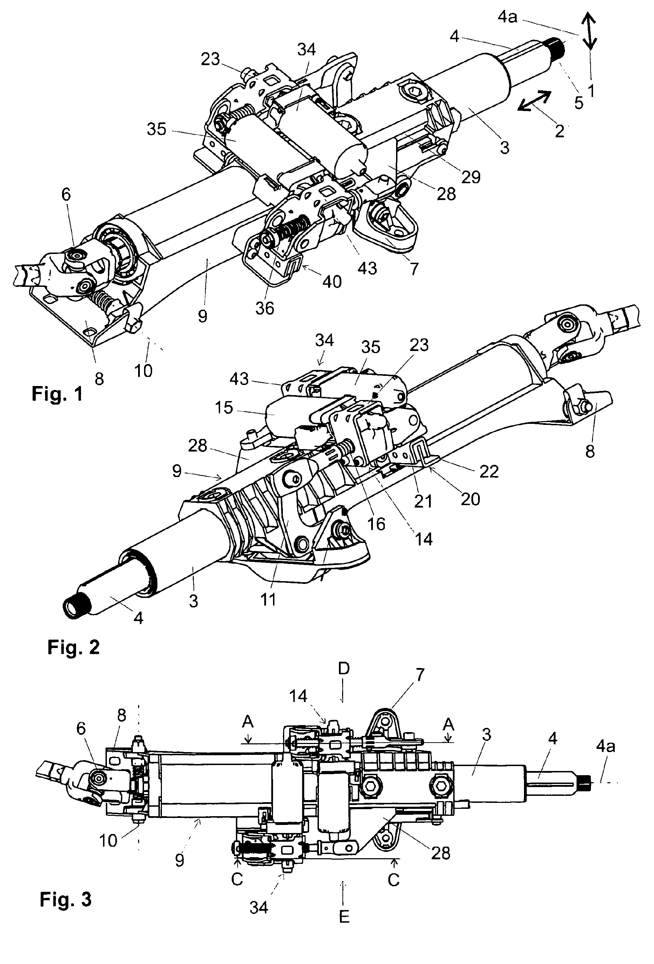

Fig. 1 eine Schrägsicht eines Ausführungsbeispiels einer Lenksäule gemäß der Erfindung;
Fig. 2 die Lenksäule von Fig. 1 in einer Schrägsicht aus einem gegenüber Fig. 1 unterschiedlichen Blickwinkel;
Fig. 3 eine Ansicht der Lenksäule von unten;
Fig. 4 eine Seitenansicht, Blickrichtung D in Fig. 3;
Fig. 5 einen Schnitt entlang der Linie AA von Fig. 3;
Fig. 6 eine Schrägsicht des Spindelantriebs für die Höhen- bzw.
Neigungsverstellung und der mit diesem verbundenen Schwenk-Dämpfungseinheit;
Fig. 7 eine Schrägsicht der Schwenk-Dämpfungseinheit aus einem gegenüber Fig. 6 unterschiedlichen Blickwinkel;

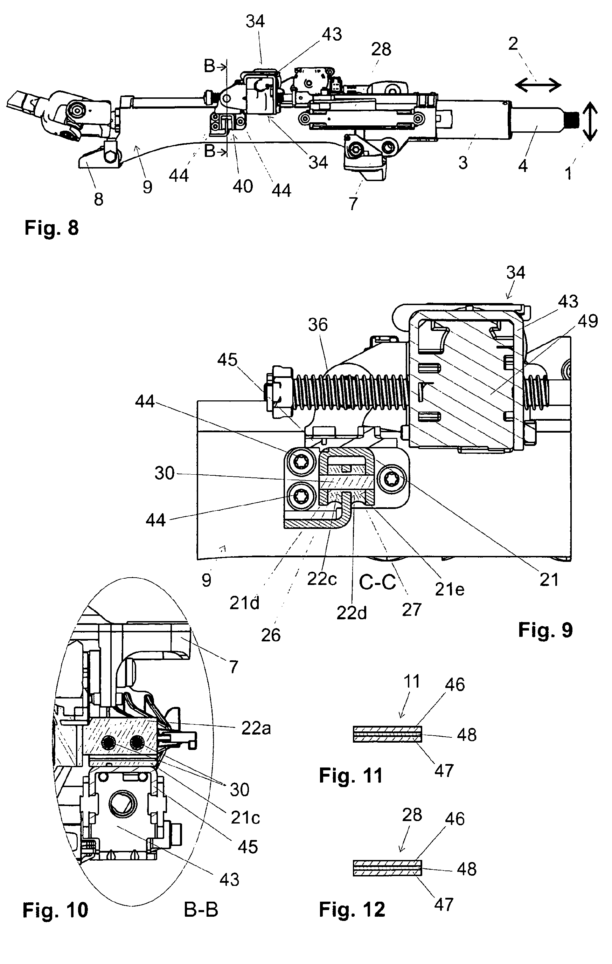

Fig. 8 eine Seitenansicht, Blickrichtung E in Fig. 3;
Fig. 9 einen Schnitt entlang der Linie CC von Fig. 3;
Fig. 10 einen Schnitt entlang der Linie BB von Fig. 8;
Fig. 11 einen Querschnitt durch den Stellhebel;
Fig. 12 einen Querschnitt durch die Lasche.

Ein Ausführungsbeispiel einer erfindungsgemäßen Lenksäule ist in den Figuren dargestellt. In dem dargestellten Ausführungsbeispiel ist die Lenksäule sowohl in die Verstellrichtung 1 der Höhen- bzw. Neigungsverstellung als auch in die Verstellrichtung 2 der Längenverstellung elektrisch verstellbar.

Die Lenksäule umfasst eine von einer Manteleinheit 3 (die auch als Mantelrohr bezeichnet werden könnte) drehbar gelagerte Lenkspindel 4, an der an einem lenkradseitigen Ende 5 ein in den Figuren nicht dargestelltes Lenkrad anbringbar ist. Zur Ermöglichung der Längenverstellung weist die Lenkspindel 4 in bekannter Weise zwei gegeneinander teleskopierbare Abschnitte auf. An die Lenkspindel 4 folgen in Richtung zum Lenkgetriebe weitere Lenkspindelabschnitte, wobei die Verbindung jeweils über ein Kardangelenk 6 erfolgt.

Zur Befestigung der Lenksäule am Chassis des Kraftfahrzeuges dienen ein hinteres und ein vorderes Montageteil 7, 8. Im Ausführungsbeispiel sind die Montageteile 7, 8 voneinander getrennt und werden separat am Kraftfahrzeug montiert. Auch eine miteinander verbundene Ausbildung ist denkbar und möglich.

Die Manteleinheit 3 ist von einer Schwenkeinheit 9 in die Verstellrichtung 2, welche parallel zur Längsachse 4a der Lenkspindel 4 liegt, verschiebbar gelagert. Die Schwenkeinheit 9 ist um die rechtwinkelig zur Längsachse 4a der Lenkspindel 4 stehende und im Montagezustand horizontal liegende Schwenkachse 10 verschwenkbar mit dem vorderen Montageteil 8 verbunden und dadurch gegenüber dem vorderen Montageteil 8 und somit auch gegenüber dem hinteren Montageteil 7 um die Schwenkachse 10 verschwenkbar.

Grundsätzlich denkbar und möglich wäre es auch, dass die Schwenkachse der Schwenkeinheit 9 vom Kardangelenk 6 gebildet wird (welches hierzu entsprechend abgestützt wird). Das vordere Montageteil 8 könnte dann auch entfallen.

Zur Verschwenkung der Schwenkeinheit 9 gegenüber dem hinteren Montageteil 7 dient ein Stellhebel 11, der an der Schwenkeinheit 9 um die Schwenkachse 12 und am hinteren Montageteil 7 um die Schwenkachse 13 verschwenkbar gelagert ist, wobei die Schwenkachsen 12, 13 parallel zur Schwenkachse 10 liegen. Bei der Verschwenkung des Stellhebels 11 um die Schwenkachse 13 wird die Schwenkeinheit 9 um die Schwenkachse 10 verschwenkt. Die Schwenkachse 10 kann sich hierbei gegenüber dem vorderen Montageteil 8 in die Verstellrichtung 3 etwas verschieben (durch die Anordnung der diese Schwenkachse bildenden Bolzen in Langlöchern des Montageteils 8). Zum Längenausgleich kann auch eines der anderen zur drehbaren Lagerung des Stellhebels 11 ausgebildeten Durchbrüche als Langloch ausgebildet sein.

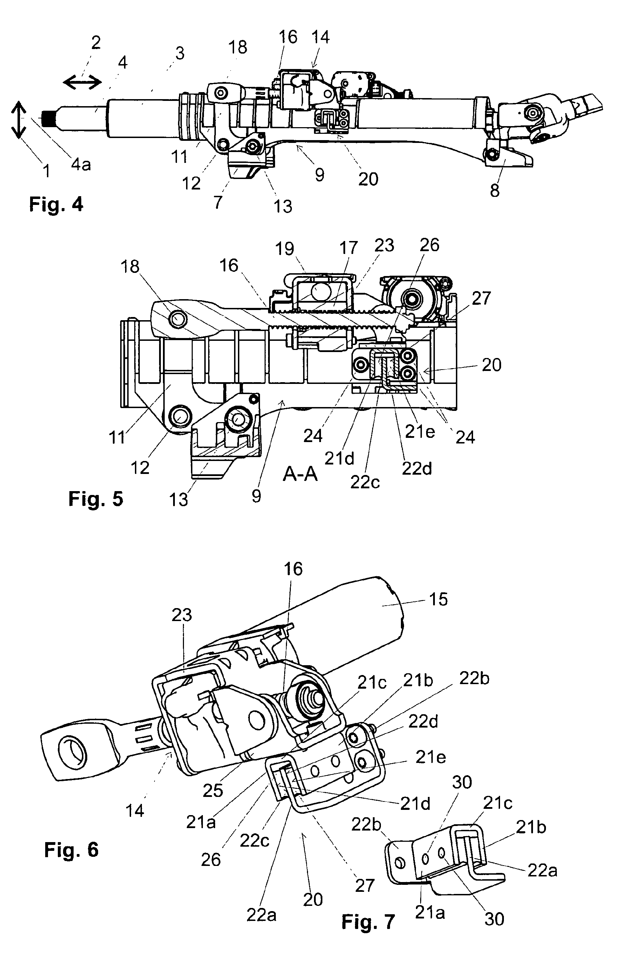

Die Verschwenkung des Stellhebels 11 um die Schwenkachse 13 erfolgt mittels eines Schwenk-Spindelantriebs 14. Dieser umfasst einen elektrischen Schwenk-Antriebsmotor 15, der über Getriebeglieder, die in der Schnittdarstellung von Fig. 5 nur stark schematisiert bzw. durch strichlierte Linien angedeutet dargestellt sind, mit einer Gewindespindel 16 verbunden ist. Auf dem Außengewinde der Gewindespindel 16 ist eine vom Schwenk-Antriebsmotor 15 angetriebene Spindelmutter 17 angeordnet. Durch Drehung der Spindelmutter 17 wird die Gewindespindel 16 in ihre axiale Richtung (=in Richtung ihrer Längsachse) verschoben. Die Gewindespindel 16 ist mit dem Stellhebel 11 um die parallel zu den Schwenkachsen 12, 13 liegende Schwenkachse 18 verschwenkbar verbunden.

Der Antrieb der Spindelmutter 17 erfolgt mittels einer auf der Ausgangswelle des Schwenk-Antriebsmotors 15 angeordneten Schnecke, die mit einer außen um die Spindelmutter 17 umlaufenden Schneckenverzahnung in Eingriff steht.

Der Schwenk-Antriebsmotor 15 ist über eine Schwenk-Dämpfungseinheit 20 mit der Schwenkeinheit 9 verbunden. Hierzu ist ein primäres Verbindungsteil 21 der Schwenk-Dämpfungseinheit 20 um eine parallel zu den Schwenkachsen 12, 13 , 18 liegende Schwenkachse verschwenkbar mit einem Lagerteil 23 verbunden, welches Getriebeteile des Schwenk-Spindelantriebs 14 lagert und an dem der Schwenk-Antriebsmotor 15 befestigt ist. Die verschwenkbare Verbindung erfolgt über ein starr mit dem primären Verbindungsteil 21 verbundenes Schwenkteil 25. Weiters ist ein sekundäres Verbindungsteil 22 der Schwenk-Dämpfungseinheit 20 an der Schwenkeinheit 9 mittels Verbindungsschrauben 24 befestigt.

Das primäre Verbindungsteil 21 besitzt eine starre U-förmige Ausbildung mit ersten und zweiten Schenkeln 21 a, 21 b, die durch einen Basisschenkel 21 c miteinander verbunden sind. Das sekundäre Verbindungsteil 22 besitzt einen Steg 22a, der in den zwischen den Schenkeln 21 a, 21 b liegenden Zwischenraum ragt. Mit dem Steg 22a ist ein Montagesteg 22b starr verbunden, der Bohrungen zum Durchtritt der Verbindungsschrauben 24 aufweist.

Die zueinander gerichteten Oberflächen der ersten und zweiten Schenkel 21 a, 21 b bilden erste und dritte Anlageflächen 21 d, 21e. Die voneinander weggericheten Oberflächen des Stegs 22a bilden zweite und vierte Anlageflächen 22c, 22d. Zwischen der ersten und der zweiten Anlagefläche 21 d, 22c, die in axialer Richtung der Gewindespindel 16 voneinander beabstandet sind und somit einen Zwischenraum zwischen sich aufweisen, ist ein Dämpfungsmaterial 26 angeordnet. Zwischen der dritten und der vierten Anlagefäche 21 e, 22d, die in axialer Richtung der Gewindespindel 16 voneinander beabstandet sind und somit einen Zwischenraum zwischen sich aufweisen, ist ein Dämpfungsmaterial 27 angeordnet. Das Dämpfungsmaterial 26 besitzt eine erste Seitenfläche, mit welcher es an der ersten Anlagefläche 21 d anliegt und eine zweite Seitenfläche, mit welcher es an der zweiten Anlagefläche 22c anliegt. Das Dämpfungsmaterial 27 besitzt eine erste Seitenfläche, mit welcher es an der vierten Anlagefläche 22d anliegt und eine zweite Seitenfläche, mit welcher es an der dritten Anlagefläche 21 e anliegt. Die erste Seitenfläche des Dämpfungsmaterials 26 und die erste Seitenfläche des Dämpfungsmaterials 27 sind in die gleiche Richtung gerichtet. Die zweite Seitenfläche des Dämpfungsmaterials 26 und die zweite Seitenfläche des Dämpfungsmaterials 27 sind in die gleiche Richtung gerichtet.

Vorzugsweise sind das Dämpfungsmaterial 26 und das Dämpfungsmaterial 27 identisch. Die Ausbildung aus einem Elastomer, insbesondere Gummielastomer, ist bevorzugt. Auch eine Ausbildung aus einem anderen elastomeren Material, beispielsweise auch aus einem thermoplastischen Elastomer ist denkbar und möglich. Weiters könnte eine Ausbildung aus einem viskoelastischen Material vorgesehen sein.

Im gezeigten Ausführungsbeispiel werden die Dämpfungsmaterialien 26, 27 von getrennten Teilen gebildet. Auch eine einteilige Ausbildung, wobei ein aus Dämpfungsmaterial bestehender Verbindungsabschnitt durch den Bereich zwischen dem Basisschenkel 21 c und dem freien Ende des Steges 22a verläuft, ist denkbar und möglich.

Da das Dämpfungsmaterial 26, 27 günstigerweise im Wesentlichen inkompressibel ist, ist die Schwenk-Dämpfungseinheit 20 bezüglich Kräften, die in axialer Richtung der Gewindespindel 16 wirken, relativ steif. Bezüglich Kräften, die rechtwinkelig zur axialen Richtung der Gewindespindel 16 wirken, ist die Steifigkeit demgegenüber wesentlich geringer.

Da Körperschall auf dem Weg höchster Steifigkeit abfließt, ist eine vibrationsreduzierende Ausbildung des Stellhebels 11 vorteilhaft. Der Stellhebel 11 besteht hierzu aus einem Verbundwerkstoff in Form eines mehrschichtigen, sandwichartigen Blechs, bei dem zwischen zwei metallischen Schichten eine Schicht aus einem elastomeren oder einem viskoelastischen Material vorgesehen ist. Es können z.B. die im Zusammenhang mit dem Dämpfungsmaterial 26, 27 genannten Materialien eingesetzt werden. Die beiden metallischen Deckschichten können aus Stahl oder einem Leichtmetall gefertigt sein, vorzugsweise mit Wandstärken im Bereich von 0,3mm bis 1 mm. Die dazwischenliegende Dämmschicht kann eine Dicke im Bereich von 0,03mm bis 0,1 mm aufweisen. Dieser Verbundwerkstoff kann tafelförmig oder bandförmig vorliegen und im Wesentlichen wie konventionelles Stahlblech verarbeitet werden.

Zur Verschiebung der Manteleinheit 3 gegenüber der Schwenkeinheit 9, um eine Längenverstellung der Lenksäule durchzuführen, dient ein Verschiebe-Spindelantrieb 34, der von einem Verschiebe-Antriebsmotor 35 angetrieben ist. Der Verschiebe-Spindelantrieb umfasst weiters eine Gewindespindel 36, auf deren Außengewinde eine vom Verschiebe-Antriebsmotor angetriebene Spindelmutter 49 angeordnet ist. Der Antrieb der Spindelmutter kann in gleicher Weise erfolgen, wie im Zusammenhang mit dem Schwenk-Spindelantrieb 14 beschrieben. Die Gewindespindel 36 ist mit einer Lasche 28 verschwenkbar verbunden, welche an der Manteleinheit 3 angebracht ist und durch einen Schlitz 29 in der Schwenkeinheit 9 aus dieser herausragt.

Der Verschiebe-Antriebsmotor 15 ist über eine Verschiebe-Dämpfungseinheit 40 mit der Schwenkeinheit 9 verbunden. Da die Ausbildung der Verschiebe-Dämpfungseinheit 40 im gezeigten Ausführungsbeispiel im Wesentlichen identisch zu der Schwenk-Dämpfungseinheit 20 ist, sind die zueinander korrespondierenden Teile mit den gleichen Bezugszeichen versehen und auf die entsprechende Beschreibung der Schwenk-Dämpfungseinheit 20 wird verwiesen. Das primäre Verbindungsteil 21 ist hier über das Schwenkteil 45 mit dem Lagerteil 43 des Verschiebe-Spindelantriebs 34 verbunden. Zur Verbindung des sekundären Verbindungsteils 22 mit der Schwenkeinheit 9 dienen Verbindungsschrauben 44.

Die Lasche 28 besteht vorzugsweise aus einem Verbundwerkstoff in Form eines mehrschichtigen, sandwichartigen Blechs, bei dem zwischen zwei metallischen Schichten eine Schicht aus einem elastomeren oder einem viskoelastischen Material vorgesehen ist. Der grundsätzliche Aufbau und die Materialien können gleich wie beim Stellhebel 11 ausgebildet sein.

Auch andere Teile können aus einem solchen Verbundwerkstoff ausgebildet sein, beispielsweise das Gehäuse des Schwenk-Antriebsmotors 15 und/oder des Verschiebe-Antriebsmotors 35.

Das jeweilige Dämpfungsmaterial 26, 27 der Schwenk-Dämpfungseinheit 20 und der Verschiebe-Dämpfungseinheit 40 ist mit dem jeweiligen Verbindungsteil 21, 22 durch Verpressen und/oder Anvulkanisieren und/oder Ankleben verbunden. Als redundante Sicherung können Verstiftungen durch Stifte 30, die insbesondere aus Kunststoff ausgebildet sind, vorgesehen sein. Es wird dadurch eine redundante formschlüssige Sicherung gegen ein Herausziehen gewährleistet, die aber nur ein geringes Maß an Vibrationen überträgt. Diese zusätzliche Verstiftung dient insbesondere zur Sicherung der Verbindung auch bei sehr großen Belastungen, wie sie beispielsweise im Crashfall auftreten können.

Bei einer ausreichenden Flexibilität der Gewindespindel 16 könnte das primäre Verbindungsteil 21 auch starr mit dem Lagerteil 23 verbunden sein.

Bei einer ausreichenden Flexibilität der Gewindespindel 36 und/oder einer ausreichend genauen Führung der Manteleinheit 3 gegenüber der Schwenkeinheit 9 könnte das sekundäre Verbindungsteil 22 auch starr mit dem Lagerteil 43 verbunden sein.

In einer modifizierten Ausführungsform der Erfindung könnte für die Höhen- bzw. Neigungsverstellung und/oder für die Längenverstellung auch vorgesehen sein, dass die Gewindespindel vom jeweiligen Antriebsmotor 15, 35 gedreht wird und die auf der Gewindespindel angeordnete Spindelmutter hierdurch axial verstellt wird.

Ausbildungen mit mehr oder weniger Anlageflächen des primären und des sekundären Verbindungsteils, zwischen denen jeweils ein Dämpfungsmaterial 26, 27 angeordnet ist, sind denkbar und möglich.

Der Schwenk-Spindelantrieb 14 und somit der Schwenk-Antriebsmotor 15 könnte über die Schwenk-Dämpfungseinheit 20 auch an einem fahrzeugfesten Montageteil, beispielsweise dem Montageteil 7 angebracht sein.

Der Verschiebe-Spindelantrieb 34 und somit der Verschiebe-Antriebsmotor 35 könnte über die Verschiebe-Dämpfungseinheit 40 auch an der Manteleinheit 3 angebracht sein. Auch eine Anbringung an einem fahrzeugfesten Montageteil, beispielsweise dem hinteren Montageteil 7 ist denkbar und möglich.

Soweit anwendbar, können alle Merkmale, die in einzelnen Ausführungsformen der Erfindung dargestellt sind, frei miteinander kombiniert werden, ohne den Bereich der Erfindung zu verlassen.

**Legende zu den Hinweisziffern:**

| | | | |
|---|---|---|---|
| 1 | Verstellrichtung | 21e | dritte Anlagefläche |
| 2 | Verstellrichtung | 22 | sekundäres Verbindungsteil |
| 3 | Manteleinheit | 22a | Steg |
| 4 | Lenkspindel | 22b | Montagesteg |
| 4a | Längsachse | 22c | zweite Anlagefläche |
| 5 | lenkradseitiges Ende | 22d | vierte Anlagefläche |
| 6 | Kardangelenk | 23 | Lagerteil |
| 7 | hinteres Montageteil | 24 | Verbindungsschraube |
| 8 | vorderes Montageteil | 25 | Schwenkteil |
| 9 | Schwenkeinheit | 26 | Dämpfungsmaterial |
| 10 | Schwenkachse | 27 | Dämpfungsmaterial |
| 11 | Stellhebel | 28 | Lasche |
| 12 | Schwenkachse | 29 | Schlitz |
| 13 | Schwenkachse | 30 | Stift |
| 14 | Schwenk-Spindelantrieb | 34 | Verschiebe-Spindelantrieb |
| 15 | Schwenk-Antriebsmotor | 35 | Verschiebe-Antriebsmotor |
| 16 | Gewindespindel | 36 | Gewindespindel |
| 17 | Spindelmutter | 40 | Verschiebe-Dämpfungseinheit |
| 18 | Schwenkachse | 43 | Lagerteil |
| 19 | Schnecke | 44 | Verbindungsschraube |
| 20 | Schwenk-Dämpfungseinheit | 45 | Schwenkteil |
| 21 | primäres Verbindungsteil | 46 | erste metallische Schicht |
| 21a | Schenkel | 47 | zweite metallische Schicht |
| 21b | Schenkel | 48 | dritte Schicht |
| 21c | Basisschenkel | 49 | Spindelmutter |
| 21d | erste Anlagefläche | | |

## Patentansprüche

1. Lenksäule für ein Kraftfahrzeug, die in mindestens eine Verstellrichtung (1, 2) verstellbar ist, wobei zur Verstellung in die Verstellrichtung (1, 2) oder in mindestens eine der Verstellrichtungen (1, 2) ein von einem Antriebsmotor (15, 35) angetriebener Spindelantrieb (14, 34) vorgesehen ist, der eine in eine axiale Richtung sich erstreckende Gewindespindel (16, 36) aufweist, **dadurch gekennzeichnet, dass** der Antriebsmotor (15, 35) mit einem den Antriebsmotor (15, 35) tragenden Teil (9) der Lenksäule über eine Dämpfungseinheit (20, 40) verbunden ist, welche ein primäres Verbindungsteil (21) mit einer ersten Anlagefläche (21d) und ein sekundäres Verbindungsteil (22) mit einer zweiten Anlagefläche (22c) aufweist, wobei die erste und die zweite Anlagefläche (21d, 22c) in axialer Richtung der Gewindespindel (16, 36) voneinander beabstandet sind und ein elastomeres oder viskoelastisches Dämpfungsmaterial (26) zwischen der ersten und der zweiten Anlagefläche (21d, 22c) angeordnet ist.

2. Lenksäule nach Anspruch 1, **dadurch gekennzeichnet, dass** die Oberflächennormalen auf die erste Anlagefläche (21d) und die zweite Anlagefläche (22c) parallel zur axialen Richtung der Gewindespindel (16, 36) liegen.

3. Lenksäule nach Anspruch 1 oder 2, **dadurch gekennzeichnet, dass** die Verbindungsteile (21, 22) jeweils einen plattenförmig ausgebildeten Abschnitt aufweisen, der rechtwinkelig zur axialen Richtung der Gewindespindel (16, 36) steht und die jeweilige Anlagefläche (21d, 22c) aufweist.

4. Lenksäule nach einem der Ansprüche 1 bis 3, **dadurch gekennzeichnet, dass** das zwischen der ersten und der zweiten Anlagefläche (21d, 22c) angeordnete Dämpfungsmaterial (26) von einer plattenförmig ausgebildeten Lage gebildet wird, die rechtwinkelig zur axialen Richtung der Gewindespindel (16, 36) steht und deren beiden in die axiale Richtung der Gewindespindel (16, 36) beabstandeten Seitenflächen an der ersten und der zweiten Anlagefläche (21 d, 22c) anliegen.

5. Lenksäule nach einem der Ansprüche 1 bis 4, **dadurch gekennzeichnet, dass** das primäre Verbindungsteil (21) eine dritte Anlagefläche (21 e) aufweist, die in die entgegengesetzte Richtung wie die erste Anlagefläche (21d) weist, und das sekundäre Verbindungsteil (22) eine vierte Anlagefläche (22d) aufweist, die in die entgegengesetzte Richtung wie die zweite Anlagefläche (22c) weist, wobei die dritte und die vierte Anlagefläche (21e, 22d) in die axiale Richtung der Gewindespindel (16, 36) voneinander beabstandet sind und ein elastomeres oder viskoelastisches Dämpfungsmaterial (27) zwischen der dritten und der vierten Anlagefläche (21e, 22d) angeordnet ist.

6. Lenksäule nach Anspruch 5, **dadurch gekennzeichnet, dass** das zwischen der dritten und der vierten Anlagefläche (21e, 22d) angeordnete Dämpfungsmaterial (27) von einer plattenförmig ausgebildeten Lage gebildet wird, die rechtwinkelig zur axialen Richtung der Gewindespindel (16, 36) steht und deren beiden in die axiale Richtung der Gewindespindel (16, 36) beabstandeten Seitenflächen an der dritten und der vierten Anlagefläche (21e, 22d) anliegen.

7. Lenksäule nach Anspruch 5 oder 6, **dadurch gekennzeichnet, dass** das primäre Verbindungsteil (21) in die axiale Richtung der Gewindespindel (16, 36) beabstandete, einen Zwischenraum zwischen sich aufweisende erste und zweite Schenkel (21a, 21b) besitzt, die durch einen Basisschenkel (21c) miteinander verbunden sind, wobei die erste und die dritte Anlagefläche (21d, 21e) von den zueinander gerichteten Oberflächen der ersten und zweiten Schenkel (21a, 21b) gebildet werden, und dass das sekundäre Verbindungsteil (22) in den Zwischenraum zwischen dem ersten und dem zweiten Schenkel (21a, 21b) des primären Verbindungsteils (21) ragt.

8. Lenksäule nach Anspruch 7, **dadurch gekennzeichnet, dass** die zweite und die vierte Anlagefläche (22c, 22d) von den voneinander weggerichteten Oberflächen eines in den Zwischenraum zwischen dem ersten und dem zweiten Schenkel (21 a, 21 b) des primären Verbindungsteils (21) ragenden Steges (22a) des sekundären Verbindungsteils (22) gebildet werden.

9. Lenksäule nach einem der Ansprüche 1 bis 8, **dadurch gekennzeichnet, dass** die Lenksäule in die Verstellrichtung (1) einer Höhen- oder Neigungsverstellung verstellbar ist, wobei eine die Lenkspindel (4) tragende Schwenkeinheit (9) gegenüber dem Montageteil (7) mittels des vom Antriebsmotor (15) angetriebenen Spindelantriebs (14) verschwenkbar ist und der Antriebsmotor (15) über die Dämpfungseinheit (20) mit der Schwenkeinheit (9) oder mit dem Montageteil (7) verbunden ist.

10. Lenksäule nach Anspruch 9, **dadurch gekennzeichnet, dass** zur Verschwenkung der Schwenkeinheit (9) gegenüber dem Montageteil (7) ein Stellhebel (11), der am Montageteil (7) und an der Schwenkeinheit (9) verschwenkbar gelagert ist, vom Spindelantrieb (14) für die Höhen- oder Neigungsverstellung verschwenkbar ist.

11. Lenksäule nach Anspruch 10, **dadurch gekennzeichnet, dass** der Stellhebel (11) aus einem als Verbundwerkstoff ausgeführten Blech gefertigt ist, wobei der Verbundwerkstoff eine erste metallische Schicht (46) und eine zweite metallische Schicht (47) aufweist, zwischen denen eine dritte Schicht (48) aus einem elastomeren oder viskoelastischen Material angeordnet ist.

12. Lenksäule nach einem der Ansprüche 9 bis 11, **dadurch gekennzeichnet, dass** die Dämpfungseinheit (20) für die Höhen- oder Neigungsverstellung verschwenkbar mit einem den Antriebsmotor (15) für die Höhen- oder Neigungsverstellung tragenden Lagerteil (23) des Spindelantriebs (14) für die Höhen- oder Neigungsverstellung verbunden ist.

13. Lenksäule nach einem der Ansprüche 1 bis 12, **dadurch gekennzeichnet, dass** die Lenksäule in die Verstellrichtung (2) einer Längenverstellung verstellbar ist, wobei eine die Lenkspindel (4) drehbar lagernde Manteleinheit (3) gegenüber dem Montageteil (7) in die Verstellrichtung (2) der Längenverstellung mittels des vom Antriebsmotor (35) angetriebenen Spindelantriebs (34) verschiebbar ist und der Antriebsmotor (35) über die Dämpfungseinheit (40) mit der Schwenkeinheit (9) oder der Manteleinheit (3) oder dem Montageteil (7) verbunden ist.

14. Lenksäule nach einem der Ansprüche 9 bis 12 und nach Anspruch 13, **dadurch gekennzeichnet, dass** die Manteleinheit (3) von der Schwenkeinheit (9) in die Verstellrichtung (1) der Längenverstellung verschiebbar gelagert ist.

15. Lenksäule nach Anspruch 14, **dadurch gekennzeichnet, dass** die Dämpfungseinheit (40) für die Längenverstellung verschwenkbar mit einem den Antriebsmotor (35) für die Längenverstellung tragenden Lagerteil (43) des Spindelantriebs (34) für die Längenverstellung verbunden ist.

## Claims

1. Steering column for a motor vehicle, which steering column can be adjusted in at least one adjustment direction (1, 2), wherein, for the purpose of adjustment in the adjustment direction (1, 2) or in at least one of the adjustment directions (1, 2), a spindle drive (14, 34) driven by a drive motor (15, 35) is provided, which spindle drive has a threaded spindle (16, 36) extending in an axial direction, **characterized in that** the drive motor (15, 35) is connected via a damping unit (20, 40) to a part (9) of the steering column which carries the drive motor (15, 35), which damping unit has a primary connecting part (21) having a first contact surface (21d) and a secondary connecting part (22) having a second contact surface (22c), wherein the first and the second contact surface (21d, 22c) are spaced apart from each other in the axial direction of the threaded spindle (16, 36), and an elastomeric or viscoelastic damping material (26) is arranged between the first and the second contact surface (21d, 22c).

2. Steering column according to Claim 1, **characterized in that** the surface normals to the first contact surface (21d) and the second contact surface (22c) are parallel to the axial direction of the threaded spindle (16, 36).

3. Steering column according to Claim 1 or 2, **characterized in that** the connecting parts (21, 22) each have a section in the form of a plate which is at right angles to the axial direction of the threaded spindle (16, 36) and has the respective contact surface (21d, 22c).

4. Steering column according to one of Claims 1 to 3, **characterized in that** the damping material (26) arranged between the first and the second contact surface (21d, 22c) is formed by a layer in the form of a plate which is at right angles to the axial direction of the threaded spindle (16, 36) and the two side faces of which, which are spaced apart in the axial direction of the threaded spindle (16, 36), rest against the first and the second contact surface (21d, 22c).

5. Steering column according to one of Claims 1 to 4, **characterized in that** the primary connecting part (21) has a third contact surface (21e), which faces in the opposite direction to the first contact surface (21d), and the secondary connecting part (22) has a fourth contact surface (22d), which faces in the opposite direction to the second contact surface (22c), wherein the third and the fourth contact surface (21e, 22d) are spaced apart from one another in the axial direction of the threaded spindle (16, 36), and an elastomeric or viscoelastic damping material (27) is arranged between the third and the fourth contact surface (21e, 22d).

6. Steering column according to Claim 5, **characterized in that** the damping material (27) arranged between the third and the fourth contact surface (21e, 22d) is formed by a layer in the form of a plate which is at right angles to the axial direction of the threaded spindle (16, 36) and the two side faces of which, which are spaced apart in the axial direction of the threaded spindle (16, 36), rest against the third and the fourth contact surface (21e, 22d).

7. Steering column according to Claim 5 or 6, **characterized in that** the primary connecting part (21) has first and second legs (21a, 21b), which are spaced apart in the axial direction of the threaded spindle (16, 36), have an interspace between them and are connected to one another by a base leg (21c), wherein the first and the third contact surface (21d, 21e) are formed by the mutually facing surfaces of the first and second leg (21a, 21b), and **in that** the secondary connecting part (22) projects into the interspace between the first and the second leg (21a, 21b) of the primary connecting part (21).

8. Steering column according to Claim 7, **characterized in that** the second and the fourth contact surface (22c, 22d) are formed by those surfaces of a web (22a) of the secondary connecting part (22) projecting into the interspace between the first and the second leg (21a, 21b) of the primary connecting part (21) which face away from one another.

9. Steering column according to one of Claims 1 to 8, **characterized in that** the steering column can be adjusted in the adjustment direction (1) for height or rake adjustment, wherein a pivoting unit (9) carrying the steering spindle (4) can be pivoted relative to the mounting part (7) by means of the spindle drive (14) driven by the drive motor (15), and the drive motor (15) is connected to the pivoting unit (9) or the mounting part (7) via the damping unit (20).

10. Steering column according to Claim 9, **characterized in that**, in order to pivot the pivoting unit (9) relative to the mounting part (7), an actuating lever (11), which is pivotably mounted on the mounting part (7) and on the pivoting unit (9), can be pivoted by the spindle drive (14) for height or rake adjustment.

11. Steering column according to Claim 10, **characterized in that** the actuating lever (11) is produced from a sheet embodied as composite material, wherein the composite material has a first metal layer (46) and a second metal layer (47), between which a third layer (48) composed of an elastomeric or viscoelastic material is arranged.

12. Steering column according to one of Claims 9 to 11, **characterized in that** the damping unit (20) for height or rake adjustment is connected pivotably to a bearing part (23) of the spindle drive (14) for height or rake adjustment, said bearing part (23) carrying the drive motor (15) for height or rake adjustment.

13. Steering column according to one of Claims 1 to 12, **characterized in that** the steering column can be adjusted in the adjustment direction (2) for a length adjustment, wherein a jacket unit (3) rotatably supporting the steering spindle (4) can be moved relative to the mounting part (7) in the adjustment direction (2) for length adjustment by means of the spindle drive (34) driven by the drive motor (35), and the drive motor (35) is connected to the pivoting unit (9) or the jacket unit (3) or the mounting part (7) via the damping unit (40).

14. Steering column according to one of Claims 9 to 12 and according to Claim 13, **characterized in that** the jacket unit (3) is supported by the pivoting unit (9) in a manner which allows it to be moved in the adjustment direction (1) for length adjustment.

15. Steering column according to Claim 14, **characterized in that** the damping unit (40) for length adjustment is connected pivotably to a bearing part (43) of the spindle drive (34) for length adjustment, said bearing part carrying the drive motor (35) for length adjustment.

## Revendications

1. Colonne de direction pour un véhicule automobile, qui peut être réglée dans au moins une direction de réglage (1, 2), un entraînement à broche (14, 34) entraîné par un moteur d'entraînement (15, 35) étant prévu pour le réglage dans la direction de réglage (1, 2) ou dans au moins l'une des directions de réglage (1, 2), lequel présente une broche filetée (16, 36) s'étendant dans une direction axiale, **caractérisée en ce que** le moteur d'entraînement (15, 35) est connecté à une partie (9) de la colonne de direction portant le moteur d'entraînement (15, 35) par le biais d'une unité d'amortissement (20, 40) qui présente une partie de connexion primaire (21) avec une première surface d'appui (21d) et une partie de connexion secondaire (22) avec une deuxième surface d'appui (22c), la première et la deuxième surface d'appui (21d, 22c) étant espacées l'une de l'autre dans la direction axiale de la broche filetée (16, 36) et un matériau d'amortissement élastomère ou viscoélastique (26) étant disposé entre la première et la deuxième surface d'appui (21d, 22c) .

2. Colonne de direction selon la revendication 1, **caractérisée en ce que** les normales à la surface sur la première surface d'appui (21d) et la deuxième surface d'appui (22c) sont situées parallèlement à la direction axiale de la broche filetée (16, 36).

3. Colonne de direction selon la revendication 1 ou 2, **caractérisée en ce que** les parties de connexion (21, 22) présentent chacune une portion réalisée en forme de plaque qui est perpendiculaire à la direction axiale de la broche filetée (16, 36) et qui présente la surface d'appui respective (21d, 22c) .

4. Colonne de direction selon l'une quelconque des revendications 1 à 3, **caractérisée en ce que** le matériau d'amortissement (26) disposé entre la première et la deuxième surface d'appui (21d, 22c) est formé par une couche réalisée en forme de plaque qui est perpendiculaire à la direction axiale de la broche filetée (16, 36) et dont les deux surfaces latérales espacées dans la direction axiale de la broche filetée (16, 36) s'appliquent contre la première et la deuxième surface d'appui (21d, 22c).

5. Colonne de direction selon l'une quelconque des revendications 1 à 4, **caractérisée en ce que** la partie de connexion primaire (21) présente une troisième surface d'appui (21e) qui est tournée dans la direction opposée à la première surface d'appui (21d) et la partie de connexion secondaire (22) présente une quatrième surface d'appui (22d) qui est tournée dans la direction opposée à la deuxième surface d'appui (22c), la troisième et la quatrième surface d'appui (21e, 22d) étant espacées l'une de l'autre dans la direction axiale de la broche filetée (16, 36) et un matériau d'amortissement élastomère ou viscoélastique (27) étant disposé entre la troisième et la quatrième surface d'appui (21e, 22d).

6. Colonne de direction selon la revendication 5, **caractérisée en ce que** le matériau d'amortissement (27) disposé entre la troisième et la quatrième surface d'appui (21e, 22d) est formé par une couche réalisée en forme de plaque qui est perpendiculaire à la direction axiale de la broche filetée (16, 36) et dont les surfaces latérales espacées dans la direction axiale de la broche filetée (16, 36) s'appliquent contre la troisième et la quatrième surface d'appui (21e, 22d).

7. Colonne de direction selon la revendication 5 ou 6, **caractérisée en ce que** la partie de connexion primaire (21) possède des première et deuxième branches (21a, 21b) présentant entre elles un espace intermédiaire et espacées dans la direction axiale de la broche filetée (16, 36), qui sont connectées l'une à l'autre par une branche de base (21c), la première et la troisième surface d'appui (21d, 21e) étant formées par les surfaces orientées l'une vers l'autre de la première et de la deuxième branche (21a, 21b) et **en ce que** la partie de connexion secondaire (22) fait saillie dans l'espace intermédiaire entre la première et la deuxième branche (21a, 21b) de la partie de connexion primaire (21).

8. Colonne de direction selon la revendication 7, **caractérisée en ce que** la deuxième et la quatrième surface d'appui (22c, 22d) sont formées par les surfaces orientées à l'opposé l'une de l'autre d'une nervure (22a) de la partie de connexion secondaire (22) faisant saillie dans l'espace intermédiaire entre la première et la deuxième branche (21a, 21b) de la partie de connexion primaire (21).

9. Colonne de direction selon l'une quelconque des revendications 1 à 8, **caractérisée en ce que** la colonne de direction peut être réglée dans la direction de réglage (1) d'un réglage en hauteur ou en inclinaison, une unité de pivotement (9) portant la broche de direction (4) pouvant pivoter par rapport à la partie de montage (7) au moyen de l'entraînement à broche (14) entraîné par le moteur d'entraînement (15) et le moteur d'entraînement (15) étant connecté par le biais de l'unité d'amortissement (20) à l'unité de pivotement (9) ou à la partie de montage (7).

10. Colonne de direction selon la revendication 9, **caractérisée en ce que** pour le pivotement de l'unité de pivotement (9) par rapport à la partie de montage (7), un levier de commande (11) qui est supporté de manière à pouvoir pivoter au niveau de la partie de montage (7) et au niveau de l'unité de pivotement (9), peut être pivoté par l'entraînement à broche (14) pour le réglage en hauteur ou en inclinaison.

11. Colonne de direction selon la revendication 10, **caractérisée en ce que** le levier de commande (11) est fabriqué en une tôle réalisée sous forme de matériau composite, le matériau composite présentant une première couche métallique (46) et une deuxième couche métallique (47) entre lesquelles est disposée une troisième couche (48) en matériau élastomère ou viscoélastique.

12. Colonne de direction selon l'une quelconque des revendications 9 à 11, **caractérisée en ce que** l'unité d'amortissement (20) pour le réglage en hauteur ou en inclinaison est connectée de manière à pouvoir pivoter pour le réglage en hauteur ou en inclinaison à une partie de palier (23) de l'entraînement à broche (14) portant le moteur d'entraînement (15) pour le réglage en hauteur ou en inclinaison.

13. Colonne de direction selon l'une quelconque des revendications 1 à 12, **caractérisée en ce que** la colonne de direction peut être réglée dans la direction de réglage (2) d'un réglage longitudinal, une unité d'enveloppe (3) supportant à rotation la broche de direction (4) pouvant être déplacée par rapport à la partie de montage (7) dans la direction de réglage (2) du réglage longitudinal au moyen de l'entraînement à broche (34) entraîné par le moteur d'entraînement (35) et le moteur d'entraînement (35) étant connecté par le biais de l'unité d'amortissement (40) à l'unité de pivotement (9) ou à l'unité d'enveloppe (3) ou à la partie de montage (7).

14. Colonne de direction selon l'une quelconque des revendications 9 à 12 et selon la revendication 13, **caractérisée en ce que** l'unité d'enveloppe (3) est supportée de manière déplaçable dans la direction de réglage (1) du réglage longitudinal par l'unité de pivotement (9).

15. Colonne de direction selon la revendication 14, **caractérisée en ce que** l'unité d'amortissement (40) est connectée de manière à pouvoir pivoter pour le réglage longitudinal à une partie de palier (43) de l'entraînement à broche (34) pour le réglage longitudinal portant le moteur d'entraînement (35) pour le réglage longitudinal.
